# EUROPÄISCHE PATENTSCHRIFT

(11) **EP 3 911 870 B1**
(45) Veröffentlichungstag und Bekanntmachung des Hinweises auf die Patenterteilung: **11.01.2023**
(21) Anmeldenummer: 19816522.7
(22) Anmeldetag: 21.11.2019
(51) Int. Cl.: F16F 15/14

(54) **FLIEHKRAFTPENDEL**
CENTRIFUGAL PENDULUM
PENDULE CENTRIFUGE

(30) Priorität: 17.01.2019 DE 102019101166
(43) Veröffentlichungstag der Anmeldung: 24.11.2021
(73) Patentinhaber: Schaeffler Technologies AG & Co. KG, 91074 Herzogenaurach (DE)
(72) Erfinder: SERGEEV, Andrey, 76534 Baden-Baden (DE)
(86) Internationale Anmeldenummer: PCT/DE2019/100998
(87) Internationale Veröffentlichungsnummer: WO 2020/147871

(56) Entgegenhaltungen:
- WO-A1-2015/169306
- DE-A1-102016 123 938
- DE-A1-102017 105 902

## Beschreibung

Die vorliegende Erfindung betrifft ein Fliehkraftpendel, das insbesondere zur Reduktion von Torsionsschwingungen in einem Antriebsstrang eingesetzt wird. Das Fliehkraftpendel ist insbesondere in einem Kraftfahrzeug einsetzbar, bevorzugt im Antriebsstrang eines Kraftfahrzeugs. Das Fliehkraftpendel ist insbesondere für eine Reduzierung von motorerregten Torsionsschwingungen vorgesehen. Das Fliehkraftpendel umfasst zumindest einen Flansch (als Schwungmasse) und eine Mehrzahl von Pendelmassen, die beweglich an dem Flansch angeordnet sind.

Ein Fliehkraftpendel verfügt z. B. über mindestens zwei Pendelmassen, die mittels (Pendel-)Rollen an einem Trägerelement oder zwei Trägerelementen, im Folgenden als (FKP-)Flansch bezeichnet, entlang Rollenbahnen geführt werden. Die Pendelmassen können im Feld der Zentrifugalbeschleunigung Schwingungen entlang ihrer Laufbahnen ausführen, wenn sie von Momentenschwankungen eines Verbrennungsmotors angeregt werden. Durch diese Schwingungen wird der Erregerschwingung zu passenden Zeiten Energie entzogen und wieder zugeführt, so dass es zu einer Beruhigung der Erregerschwingung kommt, das Fliehkraftpendel also als Tilger wirkt. Da sowohl die Eigenfrequenz der Fliehkraftpendelschwingung als auch die Erregerfrequenz proportional zur Drehzahl sind, kann die Tilgerwirkung eines Fliehkraftpendels über den ganzen Frequenzbereich erzielt werden.

Bei bekannten Fliehkraftpendeln, z. B. sogenannten Flansch-Pendelmasse-Flansch Fliehkraftpendeln oder Pendelmasse-Flansch-Pendelmasse-Fliehkraftpendeln (die angegebenen Komponenten sind entlang der axialen Richtung in der angegebenen Reihenfolge nebeneinander angeordnet), kontaktieren die Rollen andere Bauteile über jeweils drei Kontaktstellen. Dabei können Abweichungen der Bahngeometrie von einer Sollkontur (z. B. aufgrund von Fertigungstoleranzen) eine Schiefstellung der Rolle und als Folge erhöhten Verschleiß verursachen.

Weiter ist z. B. aus der DE 10 2009 042 818 A1 ein Fliehkraftpendel mit einer sogenannten U-Pendelmasse bekannt. In diesem Fall sind zwei Seitenbleche der Pendelmasse über ein Zwischenstück miteinander verbunden. Das Zwischenstück bildet die Rollenführungsbahn an der Pendelmasse. Der Flansch ist zwischen den Seitenblechen angeordnet. Die Rolle hat damit nur zwei Kontaktstellen. Diese Lösung eignet sich aber nur für Pendelmasse-Flansch-Pendelmasse-Fliehkraftpendel Weiterhin ist aus der DE102017105902 ein Fliehkraftpendel mit den Merkmalen des Oberbegriffs des Anspruchs 1 bekannt.

Hiervon ausgehend liegt der vorliegenden Erfindung die Aufgabe zugrunde, die eingangs geschilderten Probleme zumindest teilweise zu lindern. Insbesondere soll ein Flansch-Pendelmasse-Flansch Fliehkraftpendel vorgeschlagen werden, das herstellungstechnisch kostengünstig und darüber hinaus einfach zu montieren ist.

Diese Aufgabe wird gelöst mit einem Fliehkraftpendel gemäß den Merkmalen des unabhängigen Anspruchs 1. Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Es wird ein Fliehkraftpendel mit einer Drehachse vorgeschlagen, zumindest umfassend mindestens einen Flansch und eine Mehrzahl von Pendelmassen (z. B. mindestens zwei, ggf. drei, vier oder mehr; wobei die Pendelmassen insbesondere in gleichen Abständen voneinander entlang einer Umfangsrichtung angeordnet sind). Die Pendelmassen sind zumindest entlang einer radialen Richtung (ggf. zusätzlich entlang der Umfangsrichtung) gegenüber der Drehachse und gegenüber dem mindestens einen Flansch beweglich am mindestens einen Flansch angeordnet. Der mindestens eine Flansch umfasst eine erste Flanschhälfte und eine zweite Flanschhälfte, die entlang einer zu der Drehachse parallelen axialen Richtung nebeneinander angeordnet sind (wobei die Flanschhälften insbesondere separat herstellbar und ggf. später verbindbar oder auch einteilig ausgeführt sein können). Die Pendelmassen sind entlang der axialen Richtung zwischen den Flanschhälften angeordnet. Eine Bewegung der Pendelmassen gegenüber dem mindestens einen Flansch ist (wird im Betrieb) zumindest über eine Mehrzahl von Rollen geführt, wobei zumindest eine der Pendelmassen über eine erste Rolle nur an der ersten Flanschhälfte und über eine zweite Rolle nur an der zweiten Flanschhälfte geführt ist.

Insbesondere dient das Fliehkraftpendel der Vermeidung bzw. Reduzierung von Torsionsschwingungen in verbrennungsmotorgetriebenen Kraftfahrzeugantriebssträngen. Insbesondere ist das Fliehkraftpendel (FKP) an einer Nabe bzw. am Flansch einer Kupplungsscheibe oder direkt an einer Getriebeeingangswelle montiert.

Hier wird insbesondere vorgeschlagen, jede Pendelmasse über zwei Rollen an dem Flansch zu führen, insbesondere über jeweils eine Rolle je Flanschhälfte. Damit weist jede Rolle im Betrieb des Fliehkraftpendels nur zwei Kontaktstellen auf.

Insbesondere sind die erste Rolle und die zweite Rolle an der Pendelmasse axialfest (also gegenüber der axialen Richtung fixiert/ nicht beweglich/ nicht verschiebbar) angeordnet und ist jede Rolle entlang einer Rollenführungsbahn der Pendelmasse beweglich geführt ist.

Insbesondere ist jede Rolle über einen Führungsstift in der Rollenführungsbahn geführt, wobei ein erster Durchmesser des Führungsstifts kleiner als eine kleinste Weite der Rollenführungsbahn ist.

Insbesondere weist die Pendelmasse hin zur ersten Flanschhälfte eine erste Laufbahn und hin zur zweiten Flanschhälfte eine zweite Laufbahn auf, wobei die erste Rolle entlang der radialen Richtung zwischen der ersten Laufbahn und einer ersten Rollenbahn der ersten Flanschhälfte, die entlang der axialen Richtung einander überlappen, und die zweite Rolle entlang der radialen Richtung zwischen der zweiten Laufbahn und einer zweiten Rollenbahn der zweiten Flanschhälfte, die entlang der axialen Richtung einander überlappen, angeordnet ist.

Insbesondere sind die erste Laufbahn und die zweite Laufbahn entlang der axialen Richtung benachbart zu der Pendelmassen angeordnet und mit der Pendelmasse fest verbunden. Die Laufbahnen der Pendelmassen können so in der axialen Richtung überlappend zu Rollenbahnen der jeweiligen Flanschhälfte angeordnet werden, so dass jede Rolle entlang der radialen Richtung zwischen der Laufbahn und der Rollenbahn angeordnet ist und diese im Betrieb des Fliehkraftpendels kontaktiert (über dann insgesamt zwei Kontaktstellen je Rolle).

Insbesondere erstreckt sich der Führungsstift entlang der axialen Richtung jeweils durch die Rollenführungsbahn bis hin zur Rolle bzw. bis hin zur Laufbahn bzw. Rollenbahn. Die Rolle wird über Laufbahn und Rollenbahn geführt, wobei der Führungsstift mit Spiel in der Rollenführungsbahn angeordnet ist, so dass eine Führung der Rolle über Führungsstift und Rollenführungsbahn nicht erfolgt.

Insbesondere weist die Pendelmasse hin zur ersten Flanschhälfte ein erstes Führungselement und hin zur zweiten Flanschhälfte ein zweites Führungselement auf, wobei sich das erste Führungselement entlang der axialen Richtung in eine Führungselementführungsbahn des ersten Flanschelements und sich das zweite Führungselement entlang der axialen Richtung in eine Führungselementführungsbahn des zweiten Flanschelements hinein erstreckt.

Insbesondere ist ein Führungselement ein Niet, der mit der Pendelmasse vernietet ist und sich ausgehend von der Vernietung an der Pendelmasse entlang der axialen Richtung hin zur Flanschhälfte erstreckt.

Das Führungselement weist insbesondere eine zylindrische Umfangsfläche auf, über die das Führungselement in der Führungselementführungsbahn geführt ist.

Bevorzugt sind die erste Flanschhälfte und die zweite Flanschhälfte zueinander identisch aufgebaut. Insbesondere sind die Pendelmassen zwischen den identischen Flanschhälften angeordnet, wobei deren gleich ausgeführten vorderen Stirnseiten oder deren hinteren Stirnseiten (je nach Design der Flanschhälfte) zueinander weisen.

Insbesondere werden die Flanschhälften entlang der Umfangsrichtung zueinander verdreht angeordnet. Insbesondere sind dann Rollenbahnen der ersten Flanschhälfte in der Umfangsrichtung versetzt zu Rollenbahnen der zweiten Flanschhälfte angeordnet.

Insbesondere sind erste Rollen und zweite Rollen in der Umfangsrichtung versetzt zueinander angeordnet.

Insbesondere ist die Pendelmasse aus zwei zueinander identischen Pendelmassenhälften aufgebaut, wobei die erste Rolle nur an einer ersten Pendelmassenhälfte und die zweite Rolle nur an einer zweiten Pendelmassenhälfte angeordnet ist. Insbesondere sind die Pendelmassenhälften mit größtmöglicher Überdeckung gegenüber der axialen Richtung zueinander angeordnet.

Insbesondere weist jede Pendelmassenhälfte eine in eine axiale Richtung weisende Vorderseite und eine gegenüberliegend angeordnete Rückseite auf, wobei an der Vorderseite eine Laufbahn für die Rolle angeordnet ist; wobei die Pendelmassenhälften einander über die Rückseiten zur Ausbildung der Pendelmasse kontaktieren.

Insbesondere weist die Pendelmasse hin zur ersten Flanschhälfte ein erstes Führungselement und hin zur zweiten Flanschhälfte ein zweites Führungselement auf, wobei sich das erste Führungselement entlang der axialen Richtung in eine Führungselementführungsbahn des ersten Flanschelements und sich das zweite Führungselement entlang der axialen Richtung in eine Führungselementführungsbahn des zweiten Flanschelements hinein erstreckt, wobei jedes Führungselement (z. B. ein Niet) nur an jeweils einer Pendelmassenhälfte befestigt ist.

Insbesondere sind die Pendelmassenhälften über Nietverbindungen zur Ausbildung einer Pendelmasse miteinander verbunden.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Die Erfindung ist durch die angefügte Ansprüche definiert. Insbesondere ist darauf hinzuweisen, dass die Figuren und insbesondere die dargestellten Größenverhältnisse nur schematisch sind. Es zeigen:
- Fig. 1:: ein bekanntes Pendelmasse-Flansch-Pendelmasse Fliehkraftpendel in einer Seitenansicht im Schnitt;
- Fig. 2:: ein bekanntes Flansch-Pendelmasse-Flansch Fliehkraftpendel in einer Seitenansicht im Schnitt;
- Fig. 3:: das Fliehkraftpendel nach Fig. 1 im Betrieb in einer Seitenansicht im Schnitt;
- Fig. 4:: das Fliehkraftpendel nach Fig. 2 im Betrieb in einer Seitenansicht im Schnitt;
- Fig. 5:: ein bekanntes U-Pendelmassen Fliehkraftpendel in einer Seitenansicht im Schnitt;
- Fig. 6:: ein Fliehkraftpendel in einer perspektivischen Ansicht;
- Fig. 7:: das Fliehkraftpendel nach Fig. 6 in einer perspektivischen Ansicht, wobei eine erste Flanschhälfte weggeschnitten ist;
- Fig. 8:: eine zweite Flanschhälfte des Fliehkraftpendels nach Fig. 6 und 7 in einer Ansicht entlang der Drehachse;
- Fig. 9:: eine Pendelmasse des Fliehkraftpendels nach Fig. 6 und 7 in einer perspektivischen Ansicht;
- Fig. 10:: die Pendelmasse nach Fig. 9 in einer Explosionsdarstellung, in einer perspektivischen Ansicht; und
- Fig. 11:: eine zweite Pendelmassenhälfte der Pendelmasse nach Fig. 9 und 10 in einer Explosionsdarstellung, in einer perspektivischen Ansicht.

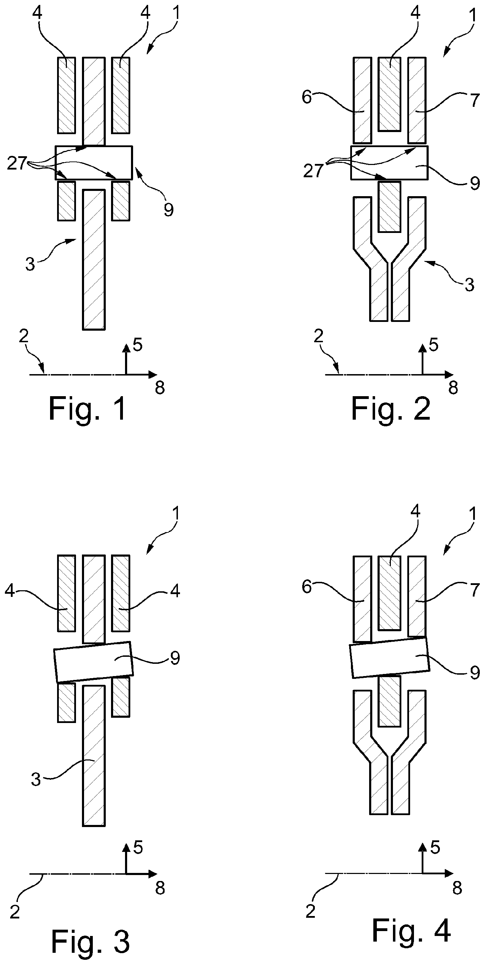

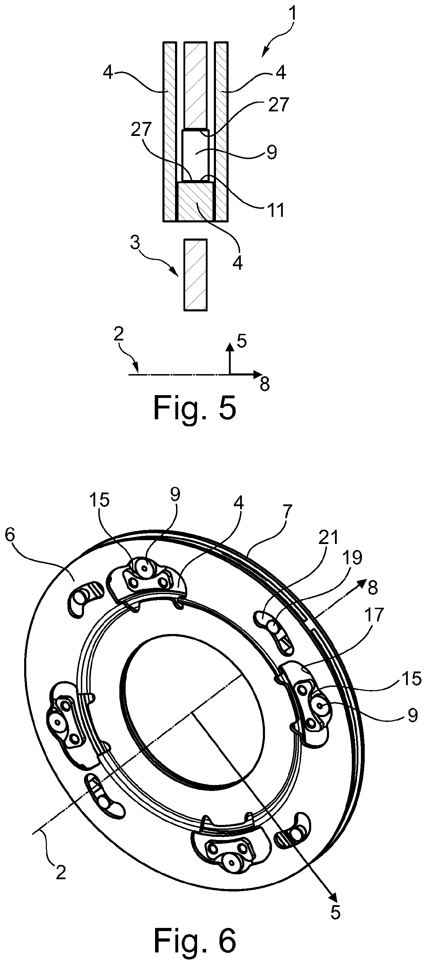

Fig. 1 zeigt ein bekanntes Pendelmasse 4-Flansch 3-Pendelmasse 4 Fliehkraftpendel 1 in einer Seitenansicht im Schnitt. Fig. 2 zeigt ein bekanntes Flansch 3-Pendelmasse 4-Flansch 3 Fliehkraftpendel 1 in einer Seitenansicht im Schnitt. Fig. 3 zeigt das Fliehkraftpendel 1 nach Fig. 1 im Betrieb in einer Seitenansicht im Schnitt. Fig. 4 zeigt das Fliehkraftpendel 1 nach Fig. 2 im Betrieb in einer Seitenansicht im Schnitt. Fig. 5 zeigt ein bekanntes U-Pendelmassen Fliehkraftpendel 1 in einer Seitenansicht im Schnitt. Die Fig. 1 bis 5 werden im Folgenden gemeinsam beschrieben.

Bei diesen bekannten Fliehkraftpendeln 1, also den Flansch 3-Pendelmasse 4-Flansch 3 Fliehkraftpendeln 1 und Pendelmasse 4-Flansch 3-Pendelmasse 4-Fliehkraftpendeln 1 (die angegebenen Komponenten Pendelmassen 4 und Flansch 3 sind entlang der axialen Richtung 8 in der angegebenen Reihenfolge nebeneinander angeordnet), kontaktieren die Rollen 9 andere Bauteile über jeweils drei Kontaktstellen 27. Dabei können Abweichungen der Bahngeometrie von einer Sollkontur (z. B. aufgrund von Fertigungstoleranzen) eine Schiefstellung der Rolle 9 und als Folge erhöhten Verschleiß verursachen.

Bei einer U-Pendelmasse 4 sind zwei Seitenbleche der Pendelmasse 4 über ein Zwischenstück miteinander verbunden. Das Zwischenstück bildet die Rollenführungsbahn 11 an der Pendelmasse 4. Der Flansch 3 ist zwischen den Seitenblechen angeordnet. Die Rolle 9 hat damit nur zwei Kontaktstellen 27. Diese Lösung eignet sich aber nur für Pendelmasse 4-Flansch 3-Pendelmasse 4-Fliehkraftpendel 1.

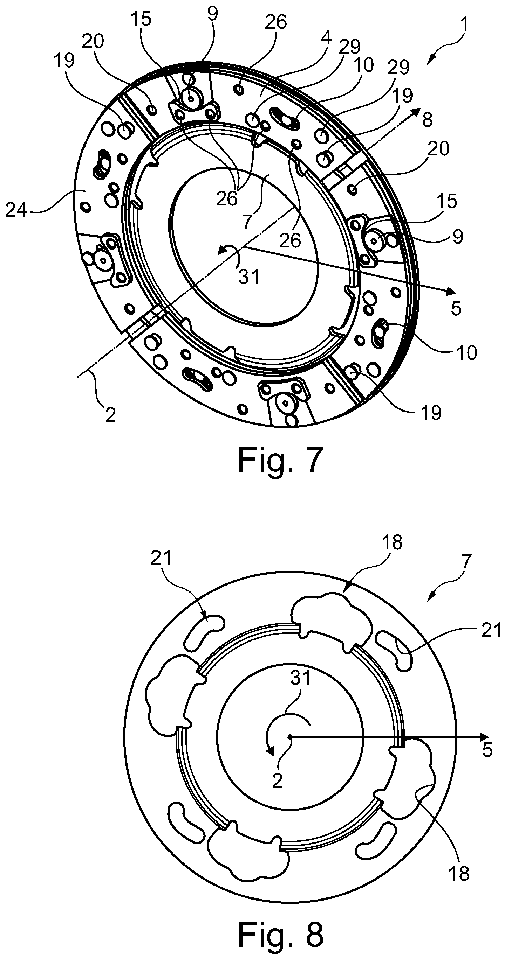

Fig. 6 zeigt ein Fliehkraftpendel 1 in einer perspektivischen Ansicht. Fig. 7 zeigt das Fliehkraftpendel 1 nach Fig. 6 in einer perspektivischen Ansicht, wobei eine erste Flanschhälfte 6 weggeschnitten ist. Die Fig. 6 und 7 werden im Folgenden gemeinsam beschrieben.

Das Fliehkraftpendel 1 umfasst einen (zweiteiligen) Flansch 3 und vier Pendelmassen 4, die in gleichen Abständen voneinander entlang einer Umfangsrichtung 31 angeordnet sind). Die Pendelmassen 4 sind entlang einer radialen Richtung 5 und zusätzlich entlang der Umfangsrichtung 31 gegenüber der Drehachse 2 und gegenüber dem Flansch 3 beweglich am Flansch 3 angeordnet. Der Flansch 3 umfasst eine erste Flanschhälfte 6 und eine zweite Flanschhälfte 7, die entlang einer zu der Drehachse 2 parallelen axialen Richtung 8 nebeneinander angeordnet sind (wobei die Flanschhälften 6, 7 separat hergestellt sind). Die Pendelmassen 4 sind entlang der axialen Richtung 8 zwischen den Flanschhälften 6, 7 angeordnet. Eine Bewegung der Pendelmassen 4 gegenüber dem Flansch 3 ist (wird im Betrieb) zumindest über eine Mehrzahl von Rollen 9, 10 geführt, wobei jede Pendelmasse 4 über eine erste Rolle 9 nur an der ersten Flanschhälfte 6 und über eine zweite Rolle 10 nur an der zweiten Flanschhälfte 7 geführt ist.

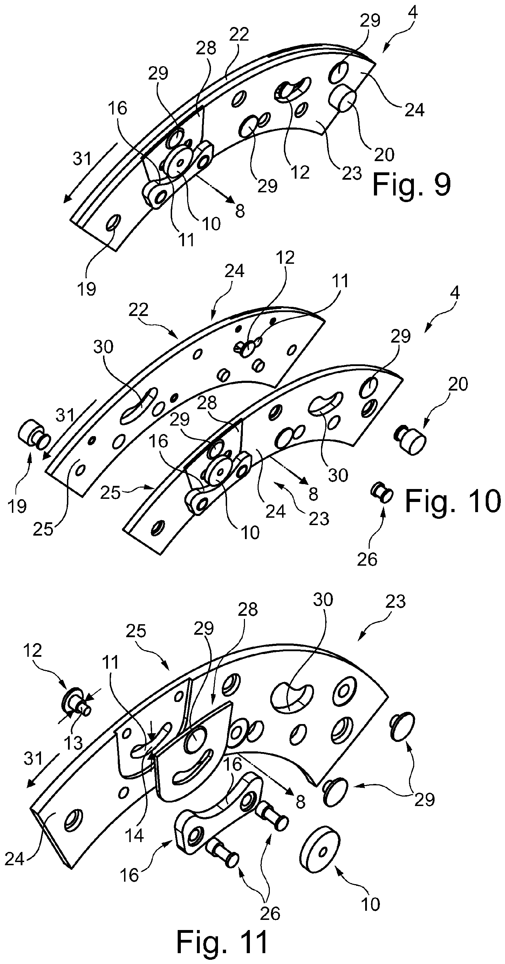

Die Pendelmasse 4 weist hin zur ersten Flanschhälfte 6 eine erste Laufbahn 15 und hin zur zweiten Flanschhälfte 7 eine zweite Laufbahn 16 (siehe Fig. 9) auf, wobei die erste Rolle 9 entlang der radialen Richtung 5 zwischen der ersten Laufbahn 15 und einer ersten Rollenbahn 17 der ersten Flanschhälfte 6, die entlang der axialen Richtung 8 einander überlappen, und die zweite Rolle 10 entlang der radialen Richtung 5 zwischen der zweiten Laufbahn 16 und einer zweiten Rollenbahn 18 (siehe Fig. 8) der zweiten Flanschhälfte 7, die entlang der axialen Richtung 8 einander überlappen, angeordnet ist.

Die erste Laufbahn 15 und die zweite Laufbahn 16 sind entlang der axialen Richtung 8 benachbart zu der Pendelmassen 4 angeordnet und mit der Pendelmasse 4 fest verbunden. Die Laufbahnen 15, 16 der Pendelmassen 4 können so in der axialen Richtung 8 überlappend zu Rollenbahnen 17, 18 der jeweiligen Flanschhälfte 6, 7 angeordnet werden, so dass jede Rolle 9, 10 entlang der radialen Richtung 5 zwischen der Laufbahn 15, 16 und der Rollenbahn 17, 18 angeordnet ist und diese im Betrieb des Fliehkraftpendels 1 kontaktiert (über dann insgesamt zwei Kontaktstellen 27 je Rolle 9, 10).

Die Pendelmasse 4 weist hin zur ersten Flanschhälfte 6 ein erstes Führungselement 19 und hin zur zweiten Flanschhälfte 7 ein zweites Führungselement 20 auf, wobei sich das erste Führungselement 19 entlang der axialen Richtung 8 in eine Führungselementführungsbahn 21 des ersten Flanschelements 6 und sich das zweite Führungselement 20 entlang der axialen Richtung 8 in eine Führungselementführungsbahn 21 des zweiten Flanschelements 8 hinein erstreckt.

Die Führungselemente 19, 20 sind hier jeweils als ein Niet ausgeführt, der mit der Pendelmasse 4 vernietet ist und sich ausgehend von der Vernietung an der Pendelmasse 4 entlang der axialen Richtung 8 hin zur Flanschhälfte 6, 7 erstreckt. Jedes Führungselement 19, 20 weist eine zylindrische Umfangsfläche auf, über die das Führungselement 19, 20 in der Führungselementführungsbahn 21 geführt ist.

Die erste Flanschhälfte 6 und die zweite Flanschhälfte 7 sind zueinander identisch aufgebaut. Die Pendelmassen 4 sind zwischen den identischen Flanschhälften 6, 7 angeordnet, wobei deren gleich ausgeführten vorderen Stirnseiten oder deren hinteren Stirnseiten (je nach Design der Flanschhälfte) zueinander weisen.

Die Flanschhälften 6, 7 sind entlang der Umfangsrichtung 31 zueinander verdreht angeordnet. Die ersten Rollenbahnen 17 der ersten Flanschhälfte 6 sind in der Umfangsrichtung 31 versetzt zu zweiten Rollenbahnen 18 der zweiten Flanschhälfte 7 angeordnet. Gleichermaßen sind erste Rollen 9 und zweite Rollen 10 in der Umfangsrichtung 31 versetzt zueinander angeordnet.

Fig. 8 zeigt eine zweite Flanschhälfte 7 des Fliehkraftpendels 1 nach Fig. 6 und 7 in einer Ansicht entlang der Drehachse 2. Auf die Ausführungen zu Fig. 6 und 7 wird verwiesen.

Die zweite Flanschhälfte 7 weist zweite Rollenbahnen 18 und Führungselementführungsbahnen 21 auf. Die zweite Rolle 10 wird entlang der radialen Richtung 5 zwischen der zweiten Laufbahn 16 und der zweiten Rollenbahn 18 der zweiten Flanschhälfte 7, die entlang der axialen Richtung 8 einander überlappen, angeordnet.

Die zweiten Laufbahnen 16 der Pendelmassen 4 werden innerhalb der Aussparung der zweiten Rollenbahnen 18 angeordnet und können so in der axialen Richtung 8 überlappend zu zweiten Rollenbahnen 18 der jeweiligen Flanschhälfte 6, 7 angeordnet werden, so dass jede Rolle 9, 10 entlang der radialen Richtung 5 zwischen der Laufbahn 15, 16 und der Rollenbahn 17, 18 angeordnet ist und diese im Betrieb des Fliehkraftpendels 1 kontaktiert (über dann insgesamt zwei Kontaktstellen 27 je Rolle 9, 10).

Das zweite Führungselement 20 der Pendelmasse 4 erstreckt sich entlang der axialen Richtung 8 in die Führungselementführungsbahn 21 des zweiten Flanschelements 8 hinein.

Fig. 9 zeigt eine Pendelmasse 4 des Fliehkraftpendels 1 nach Fig. 6 und 7 in einer perspektivischen Ansicht. Fig. 10 zeigt die Pendelmasse 4 nach Fig. 9 in einer Explosionsdarstellung, in einer perspektivischen Ansicht. Fig. 11 zeigt eine zweite Pendelmassenhälfte 23 der Pendelmasse 4 nach Fig. 9 und 10 in einer Explosionsdarstellung, in einer perspektivischen Ansicht. Die Fig. 9 bis 11 werden im Folgenden gemeinsam beschrieben. Auf die Ausführungen zu Fig. 6 und 7 wird verwiesen.

Die Pendelmasse 4 ist aus zwei zueinander identischen Pendelmassenhälften 22, 23 aufgebaut, wobei die erste Rolle 9 nur an einer ersten Pendelmassenhälfte 22 und die zweite Rolle 10 nur an einer zweiten Pendelmassenhälfte 23 angeordnet ist. Die Pendelmassenhälften 22, 23 sind mit größtmöglicher Überdeckung gegenüber der axialen Richtung 8 zueinander (fluchtend) angeordnet.

Jede Pendelmassenhälfte 22, 23 weist eine in eine axiale Richtung 8 weisende Vorderseite 24 und eine gegenüberliegend angeordnete Rückseite 25 auf, wobei an der Vorderseite 24 eine Laufbahn 15, 16 für die Rolle 9, 10 angeordnet ist; wobei die Pendelmassenhälften 22, 23 einander über die Rückseiten 25 zur Ausbildung der Pendelmasse 4 kontaktieren.

Die Pendelmasse 4 weist hin zur ersten Flanschhälfte 6 ein erstes Führungselement 19 und hin zur zweiten Flanschhälfte 7 ein zweites Führungselement 20 auf, wobei sich das erste Führungselement 19 entlang der axialen Richtung 8 in eine Führungselementführungsbahn 21 des ersten Flanschelements 6 und sich das zweite Führungselement 20 entlang der axialen Richtung 8 in eine Führungselementführungsbahn 21 des zweiten Flanschelements 7 hinein erstreckt, wobei jedes Führungselement 19, 20 (ein Niet) nur an jeweils einer Pendelmassenhälfte 22, 23 befestigt ist. Die Pendelmassenhälften 22, 23 sind über Nietverbindungen 26 zur Ausbildung einer Pendelmasse 4 miteinander verbunden.

Die erste Rolle 9 ist an der ersten Pendelmassenhälfte 22 und die zweite Rolle 10 an der zweiten Pendelmassenhälfte 23 der Pendelmasse 4 axialfest (also gegenüber der axialen Richtung 8 fixiert/ nicht beweglich/ nicht verschiebbar) angeordnet und jede Rolle 9, 10 ist entlang einer Rollenführungsbahn 11 der jeweiligen Pendelmassenhälfte 22, 23 beweglich geführt. Weiter ist jede Rolle 9, 10 über einen Führungsstift 12 in der Rollenführungsbahn 11 geführt, wobei ein erster Durchmesser 13 des Führungsstifts 12 kleiner als eine kleinste Weite 14 der Rollenführungsbahn 11 ist.

Der Führungsstift 12 erstreckt sich entlang der axialen Richtung 8 jeweils durch die Rollenführungsbahn 11 bis hin zur Rolle 9, 10 bzw. bis hin zur Laufbahn 15, 16 bzw. Rollenbahn 17, 18. Die Rolle 9, 10 wird über Laufbahn 15, 16 und Rollenbahn 17, 18 geführt, wobei der Führungsstift 12 mit Spiel in der Rollenführungsbahn 11 angeordnet ist, so dass eine Führung der Rolle 9, 10 über Führungsstift 12 und Rollenführungsbahn 11 nicht erfolgt.

An jeder Pendelmassenhälfte 22, 23 ist zwischen Vorderseite 24 und Rolle 9, 10 eine Reibfläche 28 angeordnet. Weiter sind Abstandshalter 29 vorgesehen, durch die ein gleicher Abstand der Pendelmassenhälften 22, 23 zueinander gewährleistet werden kann.

Jede Pendelmassenhälfte 22, 23 weist neben der Rollenführungsbahn 11 eine in der Umfangsrichtung 31 versetzt angeordnete Aussparung 30 auf. In dieser Aussparung 30 kann sich ein Führungsstift 12 der Rolle 10, 9 der jeweils anderen Pendelmassenhälfte 23, 22 bewegen, wobei dieser mit einem Spiel gegenüber der Aussparung 30 ausgeführt ist.

### Bezuqszeichenliste

- 1: Fliehkraftpendel
- 2: Drehachse
- 3: Flansch
- 4: Pendelmasse
- 5: radiale Richtung
- 6: erste Flanschhälfte
- 7: zweite Flanschhälfte
- 8: axiale Richtung
- 9: erste Rolle
- 10: zweite Rolle
- 11: Rollenführungsbahn
- 12: Führungsstift
- 13: erster Durchmesser
- 14: kleinste Weite
- 15: erste Laufbahn
- 16: zweite Laufbahn
- 17: erste Rollenbahn
- 18: zweite Rollenbahn
- 19: erstes Führungselement
- 20: zweites Führungselement
- 21: Führungselementführungsbahn
- 22: erste Pendelmassenhälfte
- 23: zweite Pendelmassenhälfte
- 24: Vorderseite
- 25: Rückseite
- 26: Nietverbindung
- 27: Kontaktstelle
- 28: Reibfläche
- 29: Abstandshalter
- 30: Aussparung
- 31: Umfangsrichtung

## Patentansprüche

1. Fliehkraftpendel (1) mit einer Drehachse (2), zumindest umfassend mindestens einen Flansch (3) und eine Mehrzahl von Pendelmassen (4), wobei die Pendelmassen (4) zumindest entlang einer radialen Richtung (5) gegenüber der Drehachse (2) und gegenüber dem mindestens einen Flansch (3) beweglich am mindestens einen Flansch (3) angeordnet sind; wobei der mindestens eine Flansch (3) eine erste Flanschhälfte (6) und eine zweite Flanschhälfte (7) umfasst, die entlang einer zu der Drehachse (2) parallelen axialen Richtung (8) nebeneinander angeordnet sind, wobei die Pendelmassen (4) entlang der axialen Richtung (8) zwischen den Flanschhälften (6, 7) angeordnet sind; wobei eine Bewegung der Pendelmassen (4) gegenüber dem mindestens einen Flansch (3) zumindest über eine Mehrzahl von Rollen (9, 10) geführt wird, **dadurch gekennzeichnet, dass** zumindest eine der Pendelmassen (4) über eine erste Rolle (9) nur an der ersten Flanschhälfte (6) und über eine zweite Rolle (10) nur an der zweiten Flanschhälfte (7) geführt ist.

2. Fliehkraftpendel (1) nach Anspruch 1, wobei die erste Rolle (9) und die zweite Rolle (10) an der Pendelmasse (4) axialfest angeordnet und jede Rolle (9, 10) entlang einer Rollenführungsbahn (11) der Pendelmasse (4) beweglich geführt ist.

3. Fliehkraftpendel (1) nach Anspruch 2, wobei jede Rolle (9, 10) über einen Führungsstift (12) in der Rollenführungsbahn (11) geführt ist, wobei ein erster Durchmesser (13) des Führungsstifts (12) kleiner als eine kleinste Weite (14) der Rollenführungsbahn (11) ist.

4. Fliehkraftpendel (1) nach einem der vorhergehenden Ansprüche, wobei die Pendelmasse (4) hin zur ersten Flanschhälfte (6) eine erste Laufbahn (15) und hin zur zweiten Flanschhälfte (7) eine zweite Laufbahn (16) aufweist, wobei die erste Rolle (9) entlang der radialen Richtung (5) zwischen der ersten Laufbahn (15) und einer ersten Rollenbahn (17) der ersten Flanschhälfte (6), die entlang der axialen Richtung (8) einander überlappen, und die zweite Rolle (10) entlang der radialen Richtung (5) zwischen der zweiten Laufbahn (16) und einer zweiten Rollenbahn (18) der zweiten Flanschhälfte (7), die entlang der axialen Richtung (8) einander überlappen, angeordnet ist.

5. Fliehkraftpendel (1) nach einem der vorhergehenden Ansprüche, wobei die Pendelmasse (4) hin zur ersten Flanschhälfte (6) ein erstes Führungselement (19) und hin zur zweiten Flanschhälfte (7) ein zweites Führungselement (20) aufweist, wobei sich das erste Führungselement (19) entlang der axialen Richtung (8) in eine Führungselementführungsbahn (21) des ersten Flanschelements (6) und sich das zweite Führungselement (20) entlang der axialen Richtung (8) in eine Führungselementführungsbahn (21) des zweiten Flanschelements (7) hinein erstreckt.

6. Fliehkraftpendel (1) nach einem der vorhergehenden Ansprüche, wobei die erste Flanschhälfte (6) und die zweite Flanschhälfte (7) zueinander identisch aufgebaut sind.

7. Fliehkraftpendel (1) nach einem der vorhergehenden Ansprüche, wobei die Pendelmasse (4) aus zwei zueinander identischen Pendelmassenhälften (22, 23) aufgebaut ist, wobei die erste Rolle (9) nur an einer ersten Pendelmassenhälfte (22) und die zweite Rolle (10) nur an einer zweiten Pendelmassenhälfte (23) angeordnet ist.

8. Fliehkraftpendel (1) nach Anspruch 7, wobei jede Pendelmassenhälfte (22, 23) eine in eine axiale Richtung (8) weisende Vorderseite (24) und eine gegenüberliegend angeordnete Rückseite (25) aufweist, wobei an der Vorderseite (24) eine Laufbahn (15, 16) für die Rolle (9, 10) angeordnet ist; wobei die Pendelmassenhälften (22, 23) einander über die Rückseiten (25) zur Ausbildung der Pendelmasse (4) kontaktieren.

9. Fliehkraftpendel (1) nach Anspruch 8, wobei die Pendelmasse (4) hin zur ersten Flanschhälfte (6) ein erstes Führungselement (19) und hin zur zweiten Flanschhälfte (7) ein zweites Führungselement (20) aufweist, wobei sich das erste Führungselement (19) entlang der axialen Richtung (8) in eine Führungselementführungsbahn (21) des ersten Flanschelements (6) und sich das zweite Führungselement (20) entlang der axialen Richtung (8) in eine Führungselementführungsbahn (21) des zweiten Flanschelements (7) hinein erstreckt, wobei jedes Führungselement (19, 20) nur an jeweils einer Pendelmassenhälfte (22, 23) befestigt ist.

10. Fliehkraftpendel (1) nach einem der vorhergehenden Ansprüche 7 bis 9, wobei die Pendelmassenhälften (22, 23) über Nietverbindungen (26) zur Ausbildung einer Pendelmasse (4) miteinander verbunden sind.

## Claims

1. A centrifugal pendulum (1) having an axis of rotation (2), at least comprising a minimum of one flange (3) and a plurality of pendulum masses (4), wherein the pendulum masses (4) are movably arranged on the minimum of one flange (3) at least in a radial direction (5) in relation to the axis of rotation (2) and in relation to the minimum of one flange (3); wherein the minimum of one flange (3) comprises a first flange half (6) and a second flange half (7) which are arranged adjacent to one another in an axial direction (8) parallel to the axis of rotation (2), wherein the pendulum masses (4) are arranged in the axial direction (8) between the flange halves (6, 7); wherein a movement of the pendulum masses (4) in relation to the minimum of one flange (3) is guided at least via a plurality of rollers (9, 10), **characterised in that** at least one of the pendulum masses (4) is guided via a first roller (9) only on the first flange half (6) and via a second roller (10) only on the second flange half (7).

2. The centrifugal pendulum (1) according to claim 1, wherein the first roller (9) and the second roller (10) are arranged in an axially fixed manner on the pendulum mass (4) and each roller (9, 10) is movably guided along a roller guideway (11) of the pendulum mass (4).

3. The centrifugal pendulum (1) according to claim 2, wherein each roller (9, 10) is guided via a guide pin (12) in the roller guideway (11), wherein a first diameter (13) of the guide pin (12) is smaller than a smallest width (14) of the roller guideway (11).

4. The centrifugal pendulum (1) according to any one of the preceding claims, wherein the pendulum mass (4) has a first track (15) towards the first flange half (6) and a second track (16) towards the second flange half (7), wherein the first roller (9) is arranged in the radial direction (5) between the first track (15) and a first roller track (17) of the first flange half (6), which overlap one another in the axial direction (8), and the second roller (10) is arranged in the radial direction (5) between the second track (16) and a second roller track (18) of the second flange half (7), which overlap one another in the axial direction (8).

5. The centrifugal pendulum (1) according to any one of the preceding claims, wherein the pendulum mass (4) has a first guide element (19) towards the first flange half (6) and a second guide element (20) towards the second flange half (7), wherein the first guide element (19) extends in the axial direction (8) into a guide element guideway (21) of the first flange element (6) and the second guide element (20) extends in the axial direction (8) into a guide element guideway (21) of the second flange element (7).

6. The centrifugal pendulum (1) according to any one of the preceding claims, wherein the first flange half (6) and the second flange half (7) are constructed identically to one another.

7. The centrifugal pendulum (1) according to any one of the preceding claims, wherein the pendulum mass (4) is constructed from two pendulum mass halves (22, 23) that are identical to one another, wherein the first roller (9) is arranged only on a first pendulum mass half (22) and the second roller (10) is arranged only on a second pendulum mass half (23).

8. The centrifugal pendulum (1) according to claim 7, wherein each pendulum mass half (22, 23) has a front side (24) pointing in an axial direction (8) and a rear side (25) arranged opposite thereto, wherein a track (15, 16) for the roller (9, 10) is arranged on the front side (24); wherein the pendulum mass halves (22, 23) contact one another via the rear sides (25) to form the pendulum mass (4).

9. The centrifugal pendulum (1) according to claim 8, wherein the pendulum mass (4) has a first guide element (19) towards the first flange half (6) and a second guide element (20) towards the second flange half (7), wherein the first guide element (19) extends in the axial direction (8) into a guide element guideway (21) of the first flange element (6) and the second guide element (20) extends in the axial direction (8) into a guide element guideway (21) of the second flange element (7), wherein each guide element (19, 20) is attached to only one pendulum mass half (22, 23).

10. The centrifugal pendulum (1) according to any one of the preceding claims 7 to 9, wherein the pendulum mass halves (22, 23) are connected to one another via rivet connections (26) to form a pendulum mass (4).

## Revendications

1. Pendule centrifuge (1) avec un axe de rotation (2), au moins comprenant au moins une bride (3) et une pluralité de masses pendulaires (4), les masses pendulaires (4) étant disposées sur au moins une bride (3) de manière mobile au moins le long d'une direction radiale (5) par rapport à l'axe de rotation (2) et par rapport à l'au moins une bride (3) ; dans lequel l'au moins une bride (3) comprend une première moitié de bride (6) et une seconde moitié de bride (7) lesquelles sont disposées l'une à côté de l'autre le long d'une direction axiale (8) parallèle à l'axe de rotation (2), les masses pendulaires (4) se déplaçant le long de la direction axiale (8) entre les moitiés de bride (6, 7) ; dans lequel un mouvement des masses pendulaires (4) par rapport à l'au moins une bride (3) est guidé au moins sur une pluralité de rouleaux (9, 10), **caractérisé en ce qu'**au moins une des masses pendulaires (4) est guidée par l'intermédiaire d'un premier rouleau (9) uniquement sur la première moitié de bride (6) et par l'intermédiaire d'un second rouleau (10) uniquement sur la seconde moitié de bride (7).

2. Pendule centrifuge (1) selon la revendication 1, dans lequel le premier rouleau (9) et le second rouleau (10) sont disposés axialement fixes sur la masse pendulaire (4) et chaque rouleau (9, 10) est guidé en déplacement le long d'une voie de guidage de rouleaux (11) de la masse pendulaire (4).

3. Pendule centrifuge (1) selon la revendication 2, dans lequel chaque rouleau (9, 10) est guidé par le biais d'un goujon de guidage (12) dans la voie de guidage de rouleaux (11), un premier diamètre (13) du goujon de guidage (12) étant inférieur à une plus petite largeur (14) de la voie de guidage de rouleaux (11).

4. Pendule centrifuge (1) selon l'une quelconque des revendications précédentes, dans lequel la masse pendulaire (4) présente un premier chemin de roulement (15) vers la première moitié de bride (6) et un second chemin de roulement (16) vers la seconde moitié de bride (7), le premier rouleau (9) étant disposé le long de la direction radiale (5) entre le premier chemin de roulement (15) et une première voie de rouleaux (17) de la première moitié de bride (6) qui se chevauchent le long de la direction axiale (8), et le second rouleau (10) étant disposé le long de la direction radiale (5) entre le second chemin de roulement (16) et une seconde voie de rouleaux (18) de la seconde moitié de bride (7), qui se chevauchent le long de la direction axiale (8).

5. Pendule centrifuge (1) selon l'une quelconque des revendications précédentes, dans lequel la masse pendulaire (4) présente un premier élément de guidage (19) vers la première moitié de bride (6) et un second élément de guidage (20) vers la seconde moitié de bride (7), le premier élément de guidage (19) s'étendant le long de la direction axiale (8) dans un chemin de guidage d'élément de guidage (21) du premier élément de bride (6) et le second élément de guidage (20) s'étendant le long de la direction axiale (8) dans un chemin de guidage d'élément de guidage (21) du second élément de bride (7).

6. Pendule centrifuge (1) selon l'une quelconque des revendications précédentes, dans lequel la première moitié de bride (6) et la seconde moitié de bride (7) sont construites de manière identique l'une par rapport à l'autre.

7. Pendule centrifuge (1) selon l'une quelconque des revendications précédentes, dans lequel la masse pendulaire (4) est constituée de deux moitiés de masse pendulaire (22, 23) identiques l'une à l'autre, le premier rouleau (9) étant disposé uniquement sur une première moitié de masse pendulaire (22) et le second rouleau (10) étant disposé uniquement sur une seconde moitié de masse pendulaire (23).

8. Pendule centrifuge (1) selon la revendication 7, dans lequel chaque moitié de masse pendulaire (22, 23) présente une face avant (24) orientée selon une direction axiale (8) et une face arrière (25) disposée à l'opposé, un chemin de roulement (15, 16) pour le rouleau (9, 10) étant disposé en face avant (24) ; les moitiés de masse pendulaire (22, 23) étant en contact l'une avec l'autre par les faces arrière (25) pour former la masse pendulaire (4).

9. Pendule centrifuge (1) selon la revendication 8, dans lequel la masse pendulaire (4) présente un premier élément de guidage (19) vers la première moitié de bride (6) et un second élément de guidage (20) vers la seconde moitié de bride (7), le premier élément de guidage (19) s'étendant le long de la direction axiale (8) dans un chemin de guidage d'élément de guidage (21) du premier élément de bride (6) et le second élément de guidage (20) s'étendant le long de la direction axiale (8) dans un chemin de guidage d'élément de guidage (21) du second élément de bride (7), chaque élément de guidage (19, 20) étant fixé à une seule moitié de masse pendulaire (22, 23).

10. Pendule centrifuge (1) selon l'une quelconque des revendications précédentes 7 à 9, dans lequel les moitiés de masse pendulaire (22, 23) sont reliées entre elles par des liaisons rivetées (26) pour former une masse pendulaire (4).
